# FASCICULE DE BREVET EUROPEEN

(11) **EP 1 717 118 B1**
(45) Date de publication et mention de la délivrance du brevet: **12.12.2007**
(21) Numéro de dépôt: 06112970.6
(22) Date de dépôt: 24.04.2006
(51) Int. Cl.: B60S 1/34

(54) **Essuie-glace**
Scheibenwischer
Windscreen wiper

(30) Priorité: 29.04.2005 FR 0504408
(43) Date de publication de la demande: 02.11.2006
(73) Titulaire: VALEO SYSTEMES D'ESSUYAGE, 78321 La Verrière (FR)
(72) Inventeur: Cathala, Franck, 78321, La Verriere (FR); Eustache, Jean-Pierre, 78321, La Verriere (FR)
(74) Mandataire: Rosolen-Delarue, Katell

(56) Documents cités:
- EP-A- 0 294 526
- US-A- 5 613 267

## Description

La présente invention concerne un essuie-glace comportant un bras support qui est de préférence à cinématique pantographe, ainsi qu'un balai d'essuyage à angle d'attaque variable.

L'invention trouve une application particulièrement avantageuse, mais non exclusive, dans le domaine des dispositifs d'essuyage à bras antagonistes pour pare-brises panoramiques de véhicules automobiles.

Les essuie-glaces de type pantographe sont connus pour offrir une surface de balayage maximale. Ils s'avèrent en cela particulièrement adaptés aux véhicules automobiles dotés de pare-brises panoramiques. Leur cinématique à pantographe permet en effet d'imprimer à chaque balai d'essuyage un mouvement de déplacement non circulaire sur au moins certaines portions du pare-brise, contrairement aux essuie-glaces classiques pour lesquels la trajectoire décrite par chaque balai est toujours purement circulaire sur toute la surface du pare-brise.

Il existe un paramètre essentiel pour pouvoir optimiser la qualité d'essuyage d'un essuie-glace de type pantographe. Il s'agit de l'angle d'attaque du balai, en d'autres termes son inclinaison par rapport à la normale à la surface du pare-brise, au niveau de son point de liaison avec le bras.

On sait par ailleurs qu'un angle d'attaque voisin de quelques degrés permet de garantir un fonctionnement optimal à la lame racleuse du balai d'essuyage, et qu'il est compatible avec la nécessité que ladite lame racleuse puisse se retourner lors de l'inversion de sens de balayage de l'essuie-glace.

Or la forme d'un pare-brise est presque toujours irrégulière, notamment au niveau de ses bords latéraux. Pour obtenir une efficacité maximale en terme d'essuyage, il est par conséquent nécessaire de faire varier l'inclinaison du balai d'essuyage par rapport au bras en fonction de la position effective dudit balai le long du pare-brise, de telle sorte que l'angle d'attaque dudit balai demeure sensiblement constant quelle que soit la courbure de la portion de pare-brise concernée.

Ainsi donc, il existe aujourd'hui une catégorie d'essuie-glaces qui dispose à la fois, d'une cinématique à pantographe modifiant l'inclinaison du balai d'essuyage par rapport au bras dans un plan sensiblement parallèle à la surface à essuyer, et d'une mobilité faisant varier l'angle d'attaque dudit balai d'essuyage par rapport à ladite surface à essuyer. Il est à noter que la capacité à faire varier l'angle d'attaque du balai est généralement obtenue en conférant au bras une certaine mobilité en rotation axiale, et en couplant le déplacement du bras en question avec le mouvement de balayage de l'essuie-glace. Un essuie-glace selon le préambule de la revendication 1 est connu du document EP 0294526 A1.

De tels essuie-glaces sont schématiquement constitués d'un support d'entraînement sur lequel est monté mobile en rotation axiale un bras dont l'extrémité libre est solidaire d'un balai d'essuyage monté pivotant. L'ensemble est agencé de manière à ce que le support soit en mesure d'être entraîné en déplacement suivant un mouvement de rotation alterné, à ce que l'axe de rotation du bras soit sensiblement perpendiculaire à l'axe de balayage de l'essuie-glace, et à ce que l'axe de pivotement du balai d'essuyage soit sensiblement parallèle à l'axe de balayage. Des moyens de commande sont également prévus afin d'assurer respectivement la rotation axiale du bras et le pivotement du balai d'essuyage, en fonction du déplacement angulaire du support, ces moyens de commande étant partiellement portés par un plateau destiné à être solidarisé à l'arbre moteur d'entraînement de l'essuie glace.

Afin de diminuer le nombre de pièces détachées, l'objet de l'invention est de fournir un agencement qui permette de livrer d'une seule pièce un tel essuie glace avec le plateau associé, tout en assurant un positionnement relatif correct de ces deux pièces afin de permettre un fonctionnement des moyens de commande sans autre réglage.

Pour ce faire, l'invention propose un essuie-glace comportant :
- un support d'entraînement destiné à être déplacé suivant un mouvement de rotation alterné, autour d'un axe dit de balayage qui est sensiblement perpendiculaire à la surface à essuyer,
- un bras monté mobile en rotation sur ledit support d'entraînement,
- un balai d'essuyage monté mobile en pivotement par rapport au bras,
- des moyens de commande commandant la rotation du bras en fonction du déplacement angulaire du support d'entraînement et/ou commandant le pivotement du balai d'essuyage en fonction du déplacement angulaire du support d'entraînement, où
   lesdits moyens de commande sont au moins partiellement portés par un plateau destiné à être solidarisé à un palier d'un arbre moteur d'entraînement caractérisé en ce que l'essuie-glace comporte un agencement de positionnement relatif et de solidarisation provisoire du dit support d'entraînement et du dit plateau, dans lequel l'agencement permet un débattement axial de montage entre ledit support d'entraînement et ledit plateau.

Ainsi le positionnement relatif du support d'entraînement et du plateau est assuré en usine, un préréglage des moyens de commande étant en même temps réalisé.

De préférence, ledit agencement comprend une goupille traversant une oreille périphérique dudit support et une oreille périphérique du dit plateau.

Ladite goupille peut être amovible et, avantageusement, elle est sécable.

L'invention concerne également un essuie glace tel que précisé ci-dessus dont le bras est à cinématique pantographe et/ou dont le balai d'essuyage est à angle d'attaque variable ainsi qu'un véhicule automobile, comporte au moins un tel essuie-glace.

Cette description, donnée à titre d'exemple non limitatif, est destinée à mieux faire comprendre en quoi consiste l'invention et comment elle peut être réalisée. Elle est par ailleurs donnée en référence aux dessins annexés dans lesquels:
La figure 1 illustre en perspective un essuie-glace de type pantographe, qui est conforme à l'invention.
La figure 2 est une vue similaire à la figure 1, qui met plus particulièrement en évidence les différentes mobilités dont est pourvu l'essuie-glace.
La figure 3 représente l'essuie-glace en coupe longitudinale.
La figure 4 est une coupe longitudinale montrant en détail la liaison mécanique et les interactions entre le support d'entraînement et le bras de l'essuie-glace.
La figure 5 est un éclaté faisant apparaître distinctement la structure des premiers et des seconds moyens de commande dont est doté l'essuie-glace.
La figure 6 est une vue de détail en perspective.
La figure 7 est une vue en perspective de l'essuie glace illustrant son montage sur un arbre moteur d'entraînement.
La figure 8 est une vue de détail en perspective de l'essuie glace monté.

Pour des raisons de clarté, les mêmes éléments ont été désignés par des références identiques. De même, seuls les éléments essentiels pour la compréhension de l'invention ont été représentés, et ceci sans respect de l'échelle et de manière schématique.

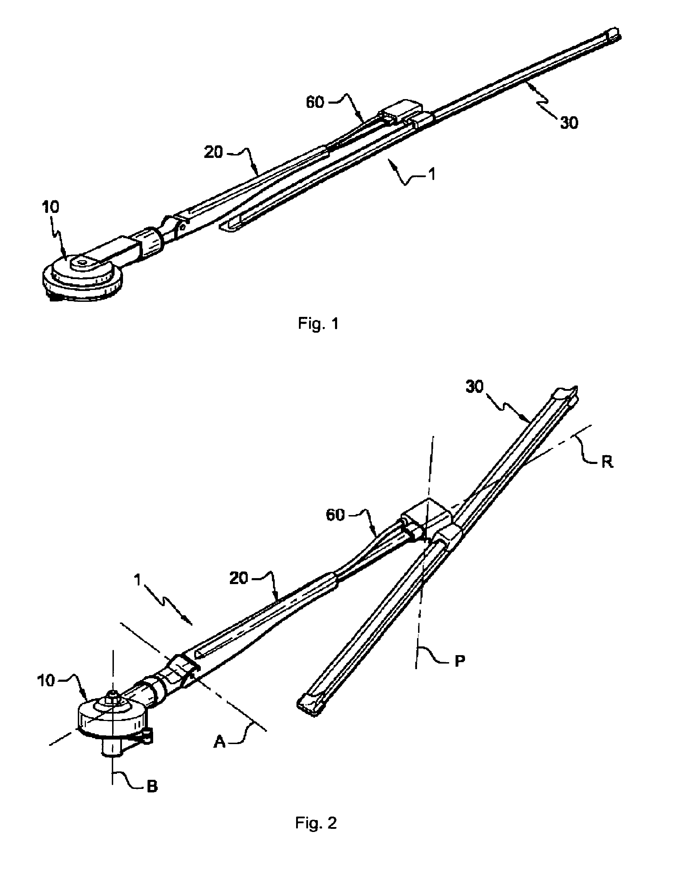

Les figures 1 à 5 illustrent un essuie-glace 1 de type pantographe qui est destiné à équiper un dispositif d'essuyage à bras antagonistes, ledit dispositif d'essuyage étant lui-même voué à être monté sur un véhicule automobile à pare-brise panoramique.

L'essuie-glace 1 est tout d'abord doté d'un support d'entraînement 10 qui est destiné à être entraîné en déplacement suivant un mouvement de rotation alterné autour d'un axe dit de balayage B. L'ensemble est ménagé de manière à ce que cet axe de balayage B soit sensiblement perpendiculaire à la surface à essuyer, et en l'occurrence au pare-brise.

L'essuie-glace 1 est ensuite pourvu d'un bras 20 qui est monté mobile en rotation axiale par rapport au support d'entraînement 10. Cette mobilité s'exerce ici suivant un axe dit de rotation R qui est sensiblement perpendiculaire à l'axe de balayage B, et par conséquent sensiblement parallèle à la surface à essuyer.

L'essuie-glace 1 comporte également un balai d'essuyage 30 qui est monté pivotant à l'extrémité du bras 20 suivant un axe dit de pivotement P. Ce dernier s'étend de manière sensiblement parallèle à l'axe de balayage B, et donc de façon sensiblement perpendiculaire, à la surface à essuyer d'une part et à l'axe de rotation R d'autre part.

L'essuie-glace 1 comprend par ailleurs des premiers moyens de commande 40 qui sont à même de générer la rotation axiale du bras 20, en fonction du déplacement angulaire du support d'entraînement 10.

L'essuie-glace 1 dispose enfin de seconds moyens de commande 50 qui sont en mesure d'engendrer le pivotement du balai d'essuyage 30 en fonction du déplacement angulaire du support d'entraînement 10.

Les seconds moyens de commande 50 sont aptes à générer un mouvement de translation au niveau du support d'entraînement 10. Ils sont ensuite à même de transmettre ce mouvement de translation le long du bras 20 et par l'intermédiaire d'un organe de transmission 60, jusqu'à l'axe de pivotement P du balai d'essuyage 30. Les seconds moyens de commande 50 sont enfin en mesure de convertir le mouvement de translation en un mouvement de rotation directement applicable au balai d'essuyage 30. L'ensemble est par ailleurs agencé de manière à ce que l'organe de transmission 60 s'étende sensiblement dans l'axe de rotation R du bras 20.

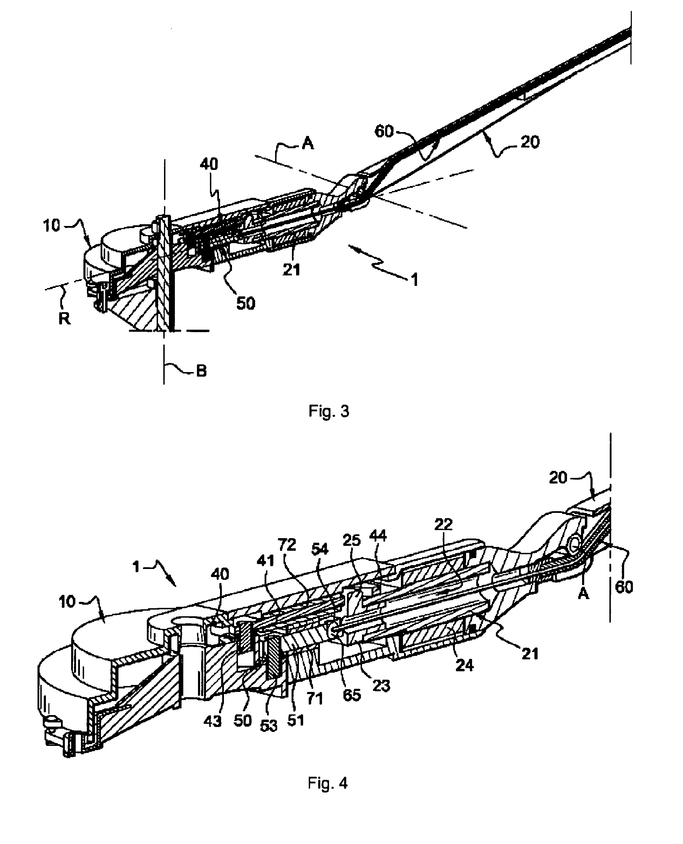

Comme visible notamment aux figures 3 et 4, la liaison mécanique entre le bras 20 et le support d'entraînement 10 est assurée par un arbre creux 21 qui est d'une part solidaire dudit bras 20, et qui est d'autre part monté mobile en rotation axiale par rapport audit support d'entraînement 10. L'ensemble est ménagé de façon à ce que l'évidement 22, présent à l'intérieur de l'arbre creux 21, soit à même de recevoir l'organe de transmission 60 positionné suivant l'axe de rotation R du bras 20.

Le fait que l'arbre creux 21 soit solidaire du bras 20 signifie qu'il peut indifféremment, être constitué par un élément indépendant qui serait solidarisé rigidement audit bras 20, ou faire partie intégrante du bras 20, c'est-à-dire ne former qu'une seule et même pièce avec ledit bras 20.

Il est à noter que la notion d'arbre creux 21 concerne ici très généralement toute forme qui est à même d'être guidée en rotation autour d'un axe donné et qui est dotée d'un évidement interne 22 s'étendant précisément au niveau de l'axe de rotation en question. On pense par exemple à un axe tubulaire, à un cylindre creusé longitudinalement au niveau de son axe central, ou à un cylindre entaillé radialement sur toute sa longueur.

C'est ainsi que l'évidement 22 peut prendre la forme notamment d'un logement cylindrique dans le cas d'un arbre tubulaire, d'un trou traversant dans le cas d'un cylindre creusé, d'une profonde rainure dans le cas d'un arbre entaillé radialement.

Les premiers moyens de commande 40 sont tout d'abord dotés d'une biellette 41 qui est montée mobile en translation par rapport au support d'entraînement 10, suivant une direction sensiblement parallèle à l'axe de rotation R du bras 20.

Les premiers moyens de commande 40 disposent en outre d'une came 42 qui est fixe par rapport au support d'entraînement 10, et qui coopère en coulissement avec une extrémité 43 de la biellette 41.

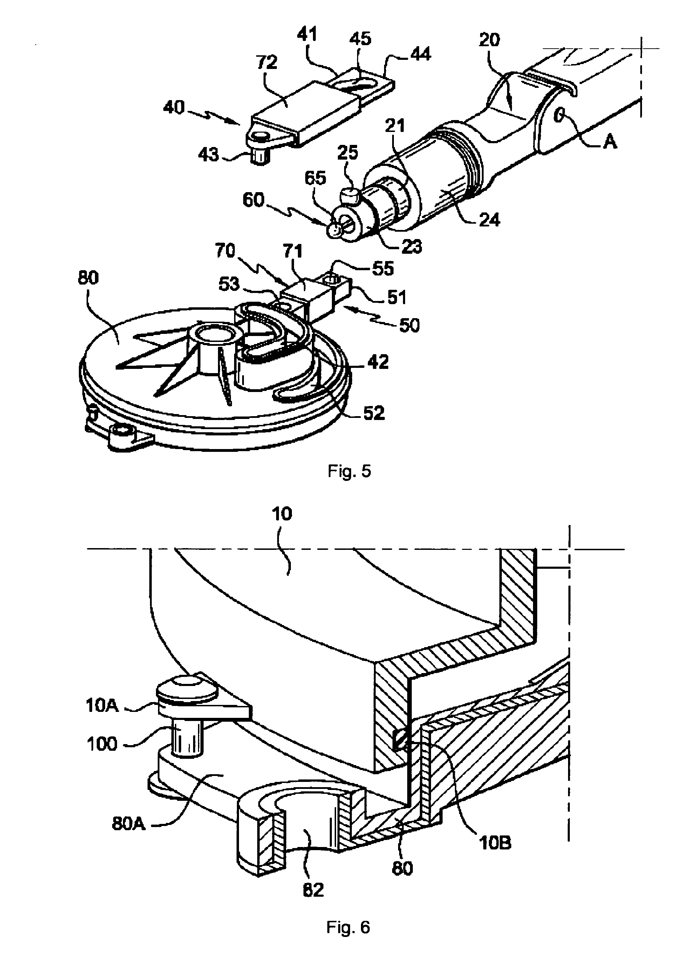

On observe que dans cet exemple particulier de réalisation, l'extrémité 43 se présente sous la forme d'un doigt qui est à même de coulisser dans le profil de came 42 en forme de rainure courbe (figures 4 ou 5).

L'autre extrémité 44 de la biellette 41 comporte un premier élément de couplage 45 qui coopère en coulissement avec un second élément de couplage 25 solidaire du bras 20, suivant une direction sensiblement oblique par rapport à l'axe de rotation R du bras 20.

Enfin, la came 42 est doté d'un profil qui est en mesure d'entraîner la biellette 41 en translation lorsque le support d'entraînement 10 est en rotation autour de l'axe de balayage B ; la translation axiale de la biellette 41 étant alors à même d'entraîner la rotation axiale du bras 20.

De manière particulièrement avantageuse, le premier élément de couplage 45 et le second élément de couplage 25 sont constitués respectivement et indifféremment par une lumière oblique et par un tenon saillant.

Les seconds moyens de commande 50 comprennent tout d'abord une biellette 51 qui est montée mobile en translation par rapport au support d'entraînement 10, suivant une direction sensiblement colinéaire à l'axe de rotation R du bras 20.

Les seconds moyens de commande 50 sont également pourvus d'une came 52 qui est fixe par rapport au support d'entraînement 10, et qui coopère en coulissement avec une extrémité 53 de la biellette 51.

On remarque là encore que dans l'exemple de réalisation choisi, l'extrémité 53 se présente sous la forme d'un doigt qui est à même de coulisser dans le profil de came 52 en forme de rainure courbe.

L'autre extrémité 54 de la biellette 51 est quant à elle solidaire de l'organe de transmission 60.

Enfin, la came 52 présente un profil qui est à même d'entraîner la biellette 51 en translation lorsque le support d'entraînement 10 est en rotation autour de l'axe de balayage B.

De manière particulièrement avantageuse, la came 42 des premiers moyens de commande 40 et la came 52 des seconds moyens de commande 50 font parties d'une seule et même pièce et sont portés par un plateau 80 destiné à être solidarisé à un arbre moteur d'entraînement.

Comme visible notamment sur la figure 5, l'essuie-glace 1 comporte en outre des moyens 70 qui sont en mesure de guider le mouvement de translation propagé par l'organe de transmission 60.

Dans cet exemple de réalisation, les moyens de guidage 70 comprennent une glissière principale 71 qui est à même de coopérer en coulissement longitudinal avec la biellette 51 des seconds moyens de commande 50, guidant ainsi la translation axiale de ladite biellette 51.

Les moyens de guidage 70 sont en outre pourvu d'une glissière secondaire 72 qui est en mesure de coopérer en coulissement longitudinal avec la biellette 41 des premiers moyens de commande 40, guidant ainsi la translation axiale de ladite biellette 41.

Selon une autre particularité, l'organe de transmission 60 s'étend à l'intérieur du bras 20 ainsi qu'on peut le voir clairement à la figure 3.

De manière particulièrement avantageuse, l'organe de transmission 60 est flexible, c'est-à-dire que sa structure est souple tout en étant inextensible longitudinalement. II est à noter que cette caractéristique s'avère tout à fait appropriée dans le cas où, comme dans l'exemple choisi ici pour illustrer l'invention, le bras 20 est doté d'une articulation lui permettant d'être relevé en vue par exemple d'effectuer un changement de balai d'essuyage 30.

Dans ce mode de réalisation, l'organe de transmission 60 est constitué par un câble gainé dont la tête forme l'élément d'ancrage 65

Selon une autre particularité, le bras 20 est articulé à proximité du support d'entraînement 10, suivant un axe dit d'articulation A qui est sensiblement perpendiculaire aux axes de balayage B et de rotation R (figures 2 à 4). Cela signifie en d'autres termes que l'axe d'articulation A est orienté de façon sensiblement parallèle à la surface à essuyer. Quoi qu'il en soit, l'ensemble est par ailleurs agencé de manière à ce que l'organe de transmission 60 s'étende à proximité directe de l'axe d'articulation A.

Cette caractéristique s'avère particulièrement avantageuse dès lors qu'il est nécessaire de relever le bras 20, par exemple pour changer le balai d'essuyage 30. Le passage de l'organe de transmission 60 au plus près de l'axe d'articulation A évite en effet les problèmes de déformation de l'organe de transmission dans l'hypothèse où bien sûr, celui présente une structure flexible.

Selon l'invention, qui est plus particulièrement illustrée sur les figures 6 à 8, les moyens de commande étant au moins partiellement portés par le plateau 80 destiné à être solidarisé à un palier d'arbre moteur d'entraînement 90, l'essuie-glace comporte un agencement de positionnement relatif et de solidarisation provisoire du support d'entraînement 10 et du plateau 80.

Plus précisément, cet agencement comprend une goupille 100 amovible traversant une oreille périphérique 10A du support 10 et une oreille périphérique 80A du plateau 80 mises face à face.

Cette goupille 100 assure la solidarisation provisoire des deux pièces, plateau 80 et support 10, permettant leur livraison commune en tant qu'unique pièce détachée. Dans cette position solidarisée, ces deux pièces sont dans une position relative assurant le correct positionnement des moyens de commande.

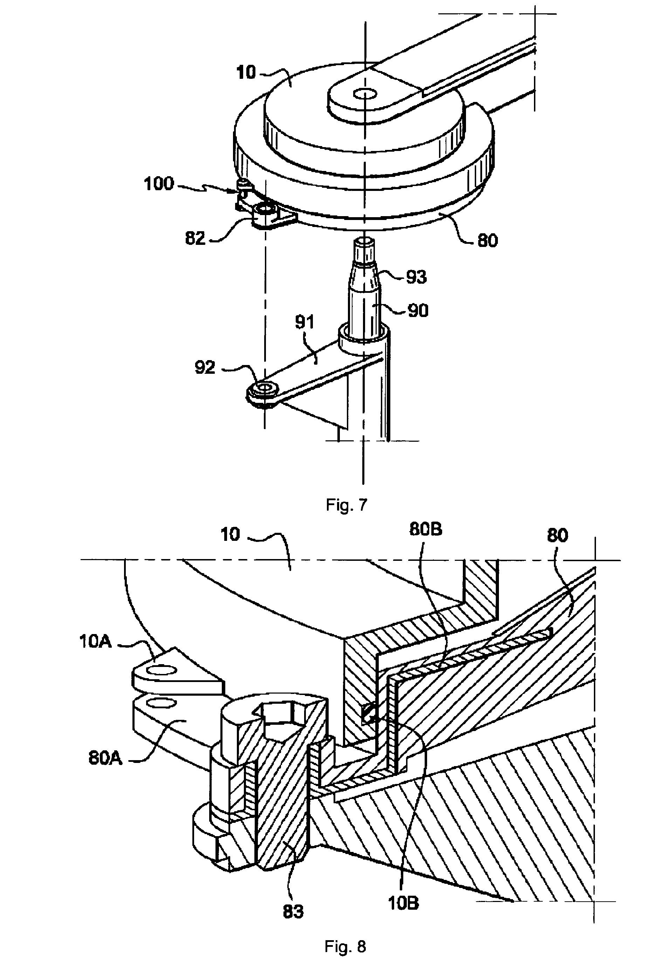

Comme visible sur la figure 7, l'arbre moteur 90 est monté sur un palier fixe comportant un bras de fixation 91 portant à son extrémité un alésage fileté 92. Le plateau 80 porte sur sa périphérie un alésage 82 et est avantageusement renforcée à cet endroit par une entretoise 80B formant un insert dans l'alésage 82. Lors du montage de l'essuie glace, l'arbre moteur 90 est monté dans un alésage central du plateau 80 et du support d'entraînement 10 et les deux alésages 82, 92 sont amenés face à face et une vis 83 est vissée dans l'alésage du bras 91, assurant la fixation du plateau 80 et de ce bras 91. A son extrémité dépassant du support d'entraînement 10, l'arbre moteur 90 est également vissé au moyen d'un écrou non représenté.

L'alésage central du support d'entraînement 10 comporte une partie conique visible sur les figures 3 et 4, qui reçoit une partie conique d'extrémité 93 de l'arbre moteur et grâce à la coopération des ces deux parties coniques, s'opère un positionnement et un serrage correct de l'arbre sur le support d'entraînement 10, lors du vissage de l'écrou.

Pour ce faire, une caractéristique de la goupille consiste dans le fait qu'elle est conçue pour permettre un débattement axial de montage entre le support d'entraînement 10 et le plateau 80. Autrement dit, elle est fixée de façon à laisser un jeu non négligeable entre les deux pièces 10, 80, bien illustré sur la figure 6, ce jeu étant supprimé par serrage de la vis 83 de fixation des deux pièces comme illustré sur la figure 8. Un joint 10B d'étanchéité est porté par le support d'entraînement 10 et vient en compression d'une face du plateau 80.

Une fois cette vis 83 mise en place et l'essuie glace solidarisé à l'arbre moteur, la goupille 100 peut soit être rompu soit être démontée, afin de permettre le déplacement de fonctionnement du support 10 et de l'essuie glace. Dans le premier cas, elle sera conçue de façon sécable.

## Revendications

1. Essuie-glace comportant :
- un support d'entraînement (10) destiné à être déplacé suivant un mouvement de rotation alterné, autour d'un axe dit de balayage (B) qui est sensiblement perpendiculaire à la surface à essuyer,
- un bras (20) monté mobile en rotation sur ledit support d'entraînement,
- un balai d'essuyage (30) monté mobile en pivotement par rapport au bras (20),
- des moyens de commande (40) commandant la rotation du bras (20) en fonction du déplacement angulaire du support d'entraînement (10) et/ou commandant le pivotement du balai d'essuyage (30) en fonction du déplacement angulaire du support d'entraînement (10), lesdits moyens de commande étant au moins partiellement portés par un plateau destiné à être solidarisé à un palier d'un arbre moteur d'entraînement,
**caractérisé en ce que** l'essuie-glace comporte un agencement de positionnement relatif et de solidarisation provisoire dudit support d'entraînement et dudit plateau dans lequel l'agencement permet un débattement axial de montage entre ledit support d'entraînement et ledit plateau.

2. Essuie glace selon la revendication 1, **caractérisé en ce que** ledit agencement comprend une goupille traversant une oreille périphérique dudit support et une oreille périphérique du dit plateau.

3. Essuie glace selon la revendication précédente, **caractérisé en ce que** ladite goupille est amovible.

4. Essuie glace selon la revendication précédente, **caractérisé en ce que** ladite goupille est sécable.

5. Essuie glace, selon une des revendications précédentes dont le bras est à cinématique pantographe et/ou dont le balai d'essuyage est à angle d'attaque variable.

6. Véhicule automobile, **caractérisé en ce qu**'il comporte au moins un essuie-glace (1) selon l'une quelconque des revendications précédentes.

## Claims

1. A windshield wiper comprising:
- a drive support (10) designed to be moved in alternating rotation, about a "sweep" axis (B) that is substantially perpendicular to the surface to be wiped;
- an arm (20) mounted to move in rotation on said drive support;
- control means (40) for causing the arm (20) to move in rotation as a function of the angular displacement of the drive support (10) and/or causing the wiper blade assembly (30) to pivot as a function of angular displacement of the drive support (10), said control means being carried at least in part by a plate designed to be secured to a bearing of a drive shaft;
said windshield wiper being **characterized in that** it is provided with an arrangement for relatively positioning and for temporarily securing together said drive support and said plate, which arrangement allows said drive support and said plate to move axially relative to each other to some extent for mounting purposes.

2. A windshield wiper according to claim 1, **characterized in that** said arrangement comprises a stud passing through a peripheral lug on said support and through a peripheral lug on said plate.

3. A windshield wiper according to the preceding claim, **characterized in that** said stud is removable.

4. A windshield wiper according to the preceding claim, **characterized in that** said stud is breakable.

5. A windshield wiper according to any one of the preceding claims, whose arm is a pantograph-type arm and/or whose wiper blade assembly has a variable angle of attack.

6. A motor vehicle, **characterized in that** it includes at least one windshield wiper (1) according to any preceding claim.

## Patentansprüche

1. Scheibenwischer mit:
- einem Antriebsträger (10), der gemäß einer abwechselnden Rotationsbewegung verschoben werden soll um eine so genannte Wischachse (B), die etwa senkrecht zur wischenden Oberfläche verläuft,
- einem drehbeweglich auf dem genannten Antriebsträger montierten Arm (20),
- einem schwenkbeweglich in Bezug auf den Arm (20) montierten Wischblatt (30),
- Steuermitteln (40), die die Rotation des Arms (20) gemäß der Winkelverschiebung des Antriebsträgers (10) und/oder das Schwenken des Wischblatts (30) gemäß der Winkelverschiebung des Antriebsträgers (10) steuern, wobei die genannten Steuermittel zumindest teilweise von einer Platte getragen werden, die mit einem Lager einer Antriebsmotorwelle verbunden werden soll,
**dadurch gekennzeichnet, dass** der Scheibenwischer eine Anordnung umfasst für die relative Positionierung und die vorläufige Befestigung des genannten Antriebsträgers und der genannten Platte, wobei die Anordnung einen axialen Montageausschlag zwischen dem genannten Antriebsträger und der genannten Platte ermöglicht.

2. Scheibenwischer gemäß Anspruch 1, **dadurch gekennzeichnet, dass** die genannte Anordnung einen Stift umfasst, der eine umlaufende Öse des genannten Trägers und eine umlaufende Öse der genannten Platte durchquert.

3. Scheibenwischer gemäß dem vorangehenden Anspruch, **dadurch gekennzeichnet, dass** der genannte Stift abnehmbar ist.

4. Scheibenwischer gemäß dem vorangehenden Anspruch, **dadurch gekennzeichnet, dass** der genannte Stift abtrennbar ist.

5. Scheibenwischer gemäß einem der vorangehenden Ansprüche, dessen Arm ein kinematischer Stromabnehmer ist und/oder dessen Wischblatt einen variablen Anstellwinkel aufweist.

6. Kraftfahrzeug, **dadurch gekennzeichnet, dass** es mindestens einen Scheibenwischer gemäß einem der vorangehenden Ansprüche umfasst.
